Europäisches Patentamt

European Patent Office

Office européen des brevets

(11) Publication number: **0 053 516**
**B1**

(12) **EUROPEAN PATENT SPECIFICATION**

(45) Date of publication of patent specification: **28.08.85**

(51) Int. Cl.⁴: **B 60 Q 9/00, B 62 D 49/08**

(21) Application number: **81305672.8**

(22) Date of filing: **02.12.81**

(54) **Roll-over warning device.**

(30) Priority: **03.12.80 GB 8038831**

(43) Date of publication of application:
**09.06.82 Bulletin 82/23**

(45) Publication of the grant of the patent:
**28.08.85 Bulletin 85/35**

(84) Designated Contracting States:
**DE FR IT SE**

(56) References cited:
**FR-A-2 352 692**
**GB-A-2 066 538**

(73) Proprietor: **THE MOTOR INDUSTRY RESEARCH ASSOCIATION**
**Watling Street**
**Nuneaton Warwickshire CV10 OTU (GB)**

(72) Inventor: **Wearing, Graham**
**The Motor Industry Research Ass Watling Street**
**Nuneaton Warwickshire CV10 0TU (GB)**

(74) Representative: **Hind, Raymond Stenton et al**
**c/o MATHISEN, MACARA & Co. European**
**Patent Attorneys Lyon House Lyon Road**
**Harrow Middlesex HA1 2ET (GB)**

## Description

The invention relates to roll-over warning systems for motor vehicles of the kind having a chassis mounted on a wheel assembly or assemblies by a suspension system.

In such vehicles, particularly when they are lorries, negotiation of a bend at too great a speed can lead to the lorry rolling over. The speeds at which such rolling over can take place can, under certain circumstances, be relatively low particularly if the bend is a tight bend such as a roundabout.

The present invention relates to a roll-over warning device for vehicles having a chassis mounted on a wheel assembly or assemblies by a suspension system, comprising means for producing an electrical signal representative of the degree of rolling movement of the chassis relative to the or a wheel assembly, means for comparing said rolling movement signal with an electrical signal representative of a predetermined maximum safe rolling movement and means for producing a warning signal in accordance with said comparison.

Such a device is known from French Patent Application No. 2352692, which discloses a warning device for agricultural vehicles and the like, in which a detector responds to the trim angle of the vehicle, relative to the horizontal, to trigger a lamp or an audible device when a predetermined threshold angle is exceeded. The device uses an opaque liquid, and an electro-optical system for detecting when a light beam is broken by the horizontal surface of the liquid. This device may be useful on slow-moving mobile equipment on uneven and sloping ground, when it gives a warning that an essentially static trim angle is approaching a danger threshold. Further this prior specification indicates that the device can also be used on fast vehicles, to cut out the vehicle battery in the event of the vehicle overturning. However, the device is incapable of providing an appropriate warning to a driver of a fast vehicle, such as a truck, negotiating a bend at too great a speed.

A roll-over warning device for vehicles negotiating bends is known from British Patent Application No. 2066538, in which signals representing vehicle speed, and the angle at which the vehicle wheels are steered, are combined and compared with a predetermined threshold representing a safe maximum combined value; the vehicle is automatically inhibited from exceeding the safety threshold, by affecting the power-assisted steering, or cutting fuel at the carburetter, for example. The device relies on the dependence of rolling angle of the chassis on the lateral (radial) acceleration of the vehicle, which in turn is a function of the sine of the steering angle and the square of the vehicle speed. However, this device fails to take into account the camber of the road, and the amount of oversteer or understeer. Moreover, the electronic circuitry for computing the acceleration signal has to deal with complex relationships and, in the example given, makes linear approximations which give a low accuracy.

It is therefore an object of the present invention to provide a roll-over warning device which reliably and accurately gives a warning when a vehicle with a suspension takes a bend at a dangerous speed.

The invention consists in a device of the type described above in relation to French Specification No. 2352692, characterised in that the rolling movement signal means comprises means for producing, as the rolling movement varies over a range of values, an electrical output representative of the actual lateral acceleration of the or a wheel assembly, said output representing the exact degree of rolling movement and being used as said rolling movement signal.

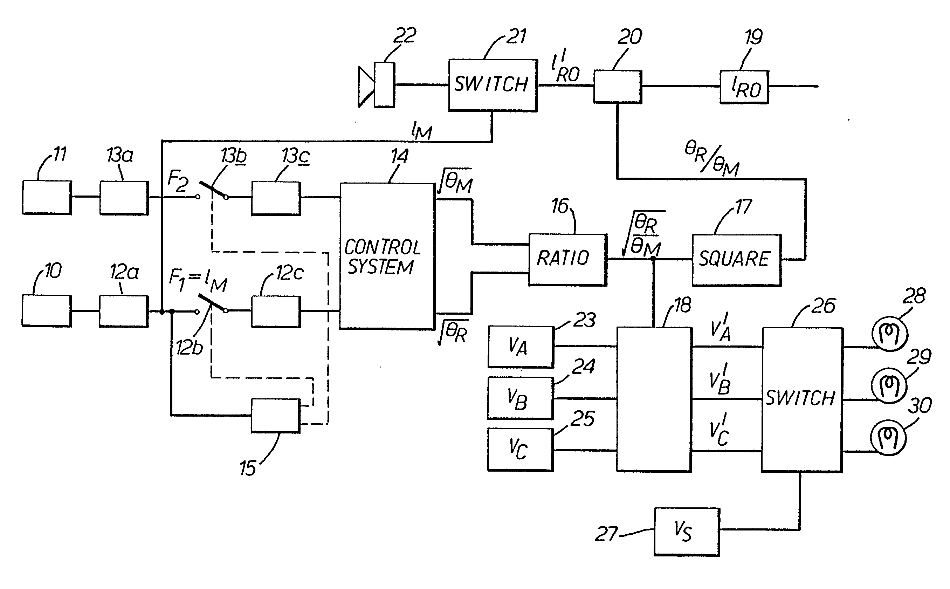

The following is a more detailed description of some embodiments of the invention, by way of example, reference being made to the accompanying drawing which is a block diagram of a vehicle roll-over warning device.

The vehicle roll-over warning device comprises two accelerometers 10, 11, one of which, 10, is mounted on an axle (not shown) of a wheel assembly of a vehicle and the other, 11, of which is mounted on a part of a chassis (not shown) of the vehicle which is generally vertically above the first accelerometer 10. The chassis is mounted on the wheel assembly via a suspension system (not shown). Each accelerometer 10, 11, produces a signal, $F_1$, $F_2$ respectively, which is representative of the lateral acceleration of the wheel assembly or the chassis in a direction which lies in a plane normal to the length of the vehicle and which is horizontal when the vehicle is stationary on a horizontal surface and which maintains a constant spatial position relatively to the wheel assembly or chassis respectively.

The outputs of the accelerometers 10, 11 are amplified by respective amplifiers 12a, 13a and are then fed via respective switches 12b, 13b to respective analogue-to-digital converters 12c, 13c. The outputs of the converters 12c, 13c are fed to a control system 14. The switches 12b, 13b are opened and closed under the control of a threshold detector 15 which receives the amplified output ($F_1$) of the axle accelerometer 10. The control system 14 has two outputs which are fed to a ratio device 16 whose output is fed to a squaring device 17 and, as a gain control signal, to a second amplifier 18 which is connected in a part of the device to be described below.

A first store 19 produces a reference lateral acceleration signal $I_{R0}$ which is fed to a first amplifier 20 which receives as a gain control signal the output of the squaring device 17. The output of the amplifier 20 is fed to a switch 21 which is controlled by the output of the amplifier 12a and whose output is, in turn, connected to an audible alarm 22 mounted in a cab of the vehicle.

The second amplifier 18 receives as inputs three velocity signals from three respective second stores 23, 24, 25. The three outputs of the amplifier 18 are fed to a switch 26 which is also connected to a sensor 27 for producing a signal ($V_s$) representative of the speed of the vehicle. The switch 26 has three outputs connected to respective lamps 28, 29, 30 which are mounted on the dashboard of the vehicle and which are green when illuminated.

In use, the device is fitted to a vehicle which is generally a commercial vehicle such as a lorry. The first store 19 is arranged to produce a signal ($I_{R0}$) which is representative of the lateral acceleration necessary to produce a maximum safe rolling movement of the chassis relatively to the wheel assembly as the vehicle rounds a bend under the most adverse operating conditions of the vehicle, for example with a full or badly placed load.

The second stores 23, 24, 25 are arranged to produce respective signals ($V_A$, $V_B$, $V_C$) which are representative of respective predetermined safe speeds of the vehicle through three bends A, B and C of particular differing characteristics. These speeds are, of course, less than the speeds through the associated bends which would cause the maximum safe rolling movement to be exceeded.

The device starts up as the vehicle moves-off. The control system 14 has in store a series of values of the roll angle, $\theta_R$, of the chassis relatively to the wheel assembly which the system predicts will occur at a series of predetermined lateral accelerations and assuming the most adverse operating conditions of the vehicle. The predetermined lateral accelerations for which values of the roll angle are stored, are held in the threshold detector 15.

The signals $F_1$, $F_2$ from the accelerometers 10, 11 are converted to digital form by the converters 12c, 13c. The threshold detector 15 compares the amplified axle acceleration with stored values of predetermined lateral acceleration and closes the switches only when the amplified axle lateral acceleration equals one of the predetermined lateral accelerations and when this lateral acceleration is between certain limits. The upper limit is set by the lateral acceleration at which wheel lift is assumed to occur because when wheel lift occurs the device no longer operates accurately. For safety's sake, this upper limit is generally set at the level of the maximum safe lateral acceleration. The lower limit is above a threshold lateral acceleration to remove non-significant signals.

The wheel signal $F_1$ is equal to the actual lateral acceleration ($I_M$) of the wheel assembly. The actual roll angle, $\theta_M$, of the chassis relatively to the wheel assembly is given by:

$$\theta_M = \sin^{-1}\left[\frac{F_2}{\sqrt{(F_1{}^2+1)}}\right]\tan^{-1}[F_1] \qquad (1)$$

The control system 14 receives $F_1$ and $F_2$ and obtains $\theta_M$ from stored values of $\theta_M$ for various values of $F_1$ and $F_2$ and calculated in accordance with equation 1. At the same time, the control system store produces a signal representative of the square root of the roll angle $\sqrt{\theta_R}$, which it is predicted will be caused by the lateral acceleration, $F_1$. The outputs of the control system are the $\sqrt{\theta_M}$ and $\sqrt{\theta_R}$ signals so that the ratio device 16 produces a $\sqrt{\theta_R/\theta_M}$ signal and the squaring device 17 produces a $\theta_R/\theta_M$ signal.

The first amplifier 20 uses this $\theta_R/\theta_M$ signal as a gain control signal amplifying the signal ($I_{R0}$) from the first store 19. The output of the amplifier 20, $I'_{R0}$, thus represents a maximum safe lateral acceleration adjusted to take account of the actual operating conditions of the vehicle. For example, if the vehicle is not fully loaded $\theta_M$ will be smaller than $\theta_R$ and so $\theta_r/\theta_M > 1$ so that $I_{R0}' > I_{R0}$.

The signal $I_{R0}'$ is received by the switch 21 which also receives the signal $I_M(=F_1)$. The switch 21 produces a first signal when $I_M = 0.6\ I_{R0}$ and a second signal when $I_M = 0.75\ I_{R0}'$, although, of course, other limits may be chosen. The first signal causes the audible alarm 22 to sound intermittently while the second signal causes the audible alarm to sound continuously, thus warning the driver that these limits are being exceeded.

The signal $\sqrt{\theta_R/\theta_M}$ is also fed as a gain control signal to the second amplifier 18. The velocity signals $V_A$, $V_B$ and $V_C$ are amplified in accordance with this signal before being passed to the switch 26. The modified velocity signals $V_A'$, $V_B'$, and $V_C'$ thus take account of the actual operating conditions of the vehicle. A square-root ratio is used because the lateral acceleration, and thus the roll angle of the vehicle, is proportional to the square of the velocity of the vehicle, for a given radius of turn.

The switch 26 also receives the signal $V_S$ and feeds a signal to lamp 28 when $V_A' > V_S$, to lamp 29 when $V_B' > V_S$ and to lamp 30 when $V_C' > V_S$. The section of road before a bend bears a visual indication of the characteristics of the bend ahead in the form of a letter A or B or C. The driver, on observing the letter A, for example, knows that he can drive through the bend without fear of rolling-over if the lamp 28 is illuminated. If it is extinguished, the speed is excessive and the vehicle needs to be braked. The illumination of the lights could be recorded on the vehicle's tachograph, thus enabling the condition of the vehicle to be determined in the event of an accident involving the vehicle rolling over.

It will be appreciated that the actual roll angle signal ($\theta_M$) and the signal $F_1$ (and $I_M$) need not be produced from the outputs of accelerometers 10, 11. For example, the accelerometers 10, 11 may be replaced by respective damped pendulums which are mounted for pivotal movement in a plane normal to the length of the vehcle. The pivot angle of each pendulum from a datum position which if fixed relatively to the associated vehicle part and which is the position of the pendulum relative to the associated vehicle part when the vehicle is stationary on a horizontal surface, is converted into a respective electrical output signal. It will be appreciated that the output signal from the wheel assembly pendulum will be representative of $F_1$ and thus of $I_M$ and that the difference between this signal and the output signal from the chassis pendulum will be representative of $\theta_M$. These signals can then be used as described above with reference to the drawing.

It will also be appreciated that the second stores 23, 24, 25, the second amplifier 18, and the switch 26 and the lamps 28, 29, 30 may be omitted. These parts may be replaced by a receiver which is activated by a signalling means, for example, a loop beneath a road surface, which transmits to the receiver information regarding the characteristics of a bend ahead of the signalling means. The receiver then produces a signal representative of the predicted safe speed of the vehicle through the bend under the most adverse operating conditions of the vehicle. This signal is fed to an amplifier of the same type as the amplifier 18 and whose gain control signal is the $\sqrt{\theta_R/\theta_M}$ signal. The modified safe speed signal is then compared with the actual speed signal and a lamp is illuminated when the actual speed signal is less than the modified safe speed signal. The illumination of the lamp indicates to the driver that the speed of the vehicle is sufficiently low to negotiate the bend safely.

The device may be used as a training aid in the training of lorry drivers.

**Claims**

1. A roll-over warning device for vehicles having a chassis mounted on a wheel assembly or assemblies by a suspension system, comprising means (10, 12) for producing an electrical signal $(F_1)$ representative of the degree of rolling movement of the chassis relative to the or a wheel assembly, means (21) for comparing said rolling movement signal $(I_M)$ with an electrical signal $(I_{R0})$ representative of a predetermined maximum safe rolling movement and means (22) for producing a warning signal in accordance with said comparison, and characterized in that the rolling movement signal means comprises means (10, 12) for producing, as the rolling movement varies over a range of values, an electrical output $(F_1)$ representative of the actual lateral acceleration $(I_M)$ of the or a wheel assembly, said output representing the exact degree of rolling movement and being used as said rolling movement signal.

2. A device according to claim 1, comprising means (19, 20) which stores a reference lateral acceleration signal $(I_{R0})$ representative of the lateral acceleration necessary to produce said predetermined maximum safe rolling movement under the most adverse operating conditions of said vehicle, which is used as said predetermined maximum safe rolling movement signal $(I_{R0})$.

3. A device according to claim 2, characterised in that there is provided means (11, 13) for producing an electrical signal $(F_2)$ which is representative of the actual roll angle $(\theta_M)$ of the chassis relatively to the or a wheel assembly, a control system (14) which includes a store which receives the wheel actual lateral acceleration signal $(F_1)$ and which produces, from information stored therein, a signal $(\theta_R)$ representative of the roll angle at said wheel actual lateral acceleration predicted from the most adverse operating conditions of the vehicle, and means (16, 17, 20) are provided for multiplying the predetermined maximum lateral acceleration signal $(I_{R0})$ by the ratio of the actual roll angle signal $(\theta_M)$ to the predicted roll angle signal $(\theta_R)$, at the actual lateral wheel acceleration $(I_M)$ producing said actual roll angle signal $(\theta_M)$, before being compared (21) with said actual lateral acceleration signal $(I_M)$.

4. A device according to claim 3 characterised in that said store (14) produces predicted roll angle signals $(\theta_R)$ for only a series of discrete wheel actual lateral accelerations $(I_M)$.

5. A device according to claim 3 or claim 4, characterised in that there is provided means (11, 13) for producing an electrical signal $(F_2)$ representative of the actual lateral acceleration of the chassis in a direction lying in a plane normal to the length of the vehicle and maintaining a constant spatial position relatively to the chassis, the control system (14) receiving both the chassis actual lateral acceleration signal $(F_2)$ and the wheel actual lateral acceleration signal $(F_1)$ and producing said actual roll angle signal $(\theta_M)$ therefrom.

6. A device according to claim 5, characterized in that said means (11, 13) for producing a chassis actual lateral acceleration signal $(F_2)$ and means (10, 12) for producing the or a wheel actual lateral acceleration signal $(F_1)$ comprise respective accelerometers (10, 11).

7. A device according to claim 5, characterised in that said means (11, 13) for producing a chassis actual lateral acceleration signal $(F_2)$ and the means (10, 12) for producing the or a wheel assembly actual lateral acceleration signal $(F_1)$ comprise respective damped pendulums mounted for pivotal movement in respective planes normal to the length of the vehicle, each pendulum producing a signal corresponding to the angle of pivot of said pendulum from a datum position which is fixed relatively to the chassis or wheel assembly respectively and which is vertical when the vehicle is horizontal, the signal from the wheel pendulum being the wheel lateral acceleration signal $(F_1)$, the difference between the signal from the wheel pendulum and the signal from the chassis pendulum being said chassis actual lateral acceleration signal $(F_2)$.

8. A device according to any one of claims 1 to 7, characterised in that there is provided indicating means (28, 29) for indicating when the speed of the vehicle is less than at least one predetermined safe speed at which a vehicle to which the device is fitted can negotiate a bend of a particular curvature characteristic in a road along which the vehicle is travelling, without producing said warning signal.

9. A device according to claim 8 when dependent on claim 3 or any claim appendant thereto, characterised in that the indicating means includes means (27) for producing an electrical signal which is representative of the actual speed $(V_s)$ of the vehicle, and means (23, 24, 25) for producing a signal $(V_A, V_B, V_C)$ representative of the or each predetermined safe speed at the most adverse operating conditions of the vehicle, and in that the or each predetermined safe speed signal is multiplied (18) by the square root of the ratio of the actual roll angle $(\theta_M)$ to the predicted roll angle signal $(\theta_R)$, at the actual lateral acceleration $(I_M)$ producing said actual roll angle signal $(\theta_M)$, before being compared with the actual speed signal $(V_s)$.

10. A device according to claim 8 or claim 9, characterised in that the indicating means includes a receiver for receiving from a signalling means placed on, adjacent or under a road surface before a bend of a particular curvature characteristic, a signal corresponding to a predetermined safe speed for said bend, and in that the receiver produces a signal which is representative of said predetermined said speed.

**Revendications**

1. Dispositif d'alarme de renversement pour des véhicules comprenant un châssis monté sur un ou plusieurs ensembles de roues au moyen d'un système de suspension, comportant un dispositif (12, 14) qui produit un signal électrique $(F_1)$ représentant le degré de mouvement de roulis du châssis par rapport à l'ensemble ou à un ensemble de roues, un dispositif (21) qui compare ledit signal de mouvement de roulis (IM) avec un signal électrique $(I_{R0})$ représentant un mouvement de roulis de sécurité maximale prédéterminé et un dispositif (22) qui produit un signal d'alarme en fonction de ladite comparaison, et caractérisé en ce que le dispositif produisant un signal de mouvement de roulis comporte un dispositif (10, 12) qui produit, quand le mouvement du roulis varie dans une plage de valeurs, une sortie électrique $(F_1)$ représentant l'accélération latérals réelle $(I_M)$ de l'ensemble ou d'un ensemble de roues, ladite sortie représentant le degré exact du mouvement de roulis et étant utilisée comme ledit signal de mouvement de roulis.

2. Dispositif selon la revendication 1, comportant un dispositif (19, 20) qui mémorise un signal d'accélération latérale de référence $(I_{R0})$ représentant l'accélération latérale nécessaire pour produire ledit mouvement de roulis maximal de sécurité prédéterminé dans des conditions de fonctionnement les plus difficiles dudit véhicule, et qui est utilisé comme ledit signal $(I_{R0})$ de mouvement de roulis maximal de sécurité prédéterminée.

3. Dispositif selon la revendication 2, caractérisé en ce qu'il comporte un dispositif (11, 13) qui produit un signal électrique $(F_2)$ représentant l'angle de roulis réel $(\theta_M)$ du châssis par rapport à l'ensemble ou à un ensemble de roues, un système de commande (14) qui comprend une mémoire destinée à recevoir le signal $(F_1)$ d'accélération latérale réelle des roues et qui produit, à partir d'information qui y sont mémorisées, un signal $(\theta_R)$ représentant l'ange de roulis à ladite accélération latérale réelle des roues, prévue pour les conditions de fonctionnement les plus difficiles du véhicule, et un dispositif (16, 17, 20) prévu pour multiplier le signal $(I_{R0})$ d'accélération latérale maximale prédéterminé par le rapport du signal d'angle de roulis réel $(\theta_M)$ et le signal d'angle de roulis prévu $(\theta_R)$ à l'accélération des roues latérale réelle $(I_M)$, produisant ledit signal d'angle de roulis réel $(\theta_M)$ avant qu'il soit comparé (21) avec ledit signal d'accélération latérale réel $(I_M)$.

4. Dispositif selon la revendication 3, caractérisé en ce que ladite mémoire (14) produit des signaux d'angle de roulis prévus $(\theta_R)$ pour seulement une série d'accélération latérale réelle discrète des roues $(I_M)$.

5. Dispositif selon la revendication 3 ou 4, caractérisé en ce qu'il comporte un dispositif (11, 13) qui produit un signal électrique $(F_2)$ représentant l'accélération latérale réelle du châssis dans une direction située dans un plan perpendiculaire à la longueur du véhicule et maintenant une position spaciale constante par rapport au châssis, le système de commande (14) recevant le signal $(F_2)$ d'accélération latérale réelle du châssis et le signal $(F_1)$ d'accélération latérale réelle des roues, et produisant ledit signal d'angle de roulis réel $(\theta_M)$ à partir de ces signaux.

6. Dispositif selon la revendication 5, caractérisé en ce que ledit dispositif (11, 13) qui produit un signal $(F_2)$ d'accélération latérale réelle du châssis et le dispositif (10, 12) qui produit le signal d'accélération latérale réelle $(F_1)$ de la roue ou des roues consiste en des accéléromètres respectifs (10, 11).

7. Dispositif selon la revendication 5, caractérisé en ce que ledit dispositif (11, 13) produit un signal $(F_2)$ d'accélération latérale réelle du châssis et le dispositif (10, 12) qui produit le signal $(F_1)$ d'accélération latérale réelle de l'ensemble ou d'un ensemble de roues consiste en des pendules amortis respectifs montés pour un mouvement pivotant dans des plans respectifs perpendiculaires à la longueur du véhicule, chaque pendule produisant un signal correspondant à l'angle de pivotement dudit pendule par rapport à une position de référence qui est fixée par rapport au châssis ou l'ensemble des roues et qui est verticale quand le véhicule est horizontal, le signal provenant du pendule de roues étant le signal $(F_1)$ d'accélération latérale des roues, la différence entre le signal provenant du pendule de roues et le signal provenant du pendule de châssis étant le signal $(F_2)$ d'accélération latérale réelle du châssis.

8. Dispositif selon l'une quelconque des revendications 1 à 7, caractérisé en ce qu'il comporte un dispositif indicateur (28, 29) destiné à indiquer si la vitesse du véhicule est inférieure à au moins une vitesse de sécurité prédéterminée à laquelle un véhicule sur lequel le dispositif est monté peut négocier une courbe avec une caractéristique de courbure particulière dans une route sur laquelle le véhicule circule sans produire ledit signal d'alarme.

9. Dispositif selon la revendication 8, dépendant de la revendication 3 ou d'une revendication qui lui est annexée, caractérisé en ce que le dispositif indicateur comporte un dispositif (27) qui produit un signal électrique représentant la vitesse réelle ($V_s$) du véhicule, un dispositif (23, 24, 25) qui produit un signal ($V_A$, $V_B$, $V_C$) représentant la vitesse ou chaque vitesse de sécurité prédéterminée dans les plus mauvaises conditions de fonctionnement du véhicule, et en ce que le signal ou chaque signal de vitesse de sécurité prédéterminée est multiplié (18) par la racine carrée du rapport entre l'angle de roulis réel ($\theta_M$) et le signal d'angle de roulis prévu ($\theta_R$) à l'accélération latérale réelle ($I_M$) produisant ledit signal d'angle de roulis réel ($\theta_M$) avant qu'il soit comparé avec le signal de vitesse réelle ($V_s$).

10. Dispositif selon la revendication 8 ou 9, caractérisé en ce que le dispositif indicateur comporte un récepteur qui reçoit, d'un dispositif de signalisation placé sur, contre ou sous une surface de route avant une courbe d'une caractéristique de courbure particulière, un signal correspondant à une vitesse de sécurité prédéterminée pour ladite courbe, et en ce que le récepteur produit un signal qui représente ladite vitesse prédéterminée.

## Patentansprüche

1. Überschlag-Warneinrichtung für Fahrzeuge, die ein mittels eines Federungssystems auf einem Radzusammenbau oder zusammengebauten Radanordnungen befestigtes Chassis aufweisen, mit einer Einrichtung (10, 12) zum Erzeugen eines elektrischen Signals ($F_1$), welches das Maß der Rollbewegung des Chassis relativ zu dem oder einem Radzusammenbau darstellt, einer Einrichtung (21), um das Rollbewegungssignal ($I_M$) mit einem elektrischen Signal ($I_{R0}$) zu vergleichen, welches eine vorbestimmte, maximale, sichere Rollbewegung darstellt, und einer Einrichtung (22), um ein Warnsignal gemäß diesem Vergleich zu erzeugen, dadurch gekennzeichnet, daß die Rollbewegung-Signaleinrichtung eine Einrichtung (10, 12) umfaßt, mit der, wenn sich die Rollbewegung über einen Wertebereich verändert, ein elektrischer Ausgang ($F_1$) erzeugbar ist, welcher die tatsächliche Querbeschleunigung ($I_M$) des oder eines Radzusammenbaus darstellt, wobei der Ausgang das genaue Maß der Rollbewegung darstellt und als das Rollbewegungssignal verwendet wird.

2. Einrichtung nach Anspruch 1, mit einer Einrichtung (19, 20), welche ein Querbeschleunigungs-Bezugssignal ($I_{R0}$) speichert, welches die Querbeschleunigung darstellt, die erforderlich ist, um die vorbestimmte, maximale, sichere Rollbewegung bei den ungünstigsten Betriebsbedingungen des Fahrzeuges zu erzeugen, und welches als das vorbestimmte, maximale, sichere Rollbewegungssignal ($I_{R0}$) verwendet wird.

3. Einrichtung nach Anspruch 2, dadurch gekennzeichnet, daß vorgesehen sind eine Einrichtung (11, 13), um ein elektrisches Signal ($F_2$) zu erzeugen, welches den tatsächlichen Rollwinkel ($\theta_M$) des Chassis relativ zu dem oder einem Radzusammenbau darstellt, ein Steuersystem (14), welches einen Speicher enthält, der das tatsächliche Radquerbeschleunigungssignal ($F_1$) erhält und welcher aufgrund von darin gespeicherter Information ein Signal ($\theta_R$) erzeugt, welches den Rollwinkel bei der tatsächlichen Radquerbeschleunigung darstellt, die ausgehend von den ungünstigsten Betriebsbedingungen des Fahrzeuges vorausgesagt ist, und eine Einrichtung (16, 17, 20), um das vorbestimmte, maximale Querbeschleunigungssignal ($I_{R0}$) mit dem Verhältnis aus dem tatsächlichen Rollwinkelsignal ($\theta_M$) und dem vorausgesagtem Rollwinkelsignal ($\theta_R$) bei der tatsächlichen Radquerbeschleunigung ($I_M$), welche das tatsächliche Rollwinkelsignal ($\theta_M$) erzeugt, zu multiplizieren, bevor es mit dem tatsächlichen Querbeschleunigungssignal ($I_M$) verglichen (21) wird.

4. Einrichtung nach Anspruch 3, dadurch gekennzeichnet, daß der Speicher (14) vorausgesagte Rollwinkelsignals ($\theta_R$) nur für eine Reihe von diskreten tatsächlichen Radquerbeschleunigungen ($I_M$) erzeugt.

5. Einrichtung nach Anspruch 3 oder 4, dadurch gekennzeichnet, daß eine Einrichtung (11, 13) vorgesehen ist, um ein elektrisches Signal ($F_2$) zu erzeugen, welches die tatsächliche Querbeschleunigung des Chassis in einer Richtung angibt, die in einer zu der Länge des Fahrzeuges normalen Ebene liegt und eine konstante Raumlage relativ zu dem Chassis beibehält, und daß das Steuersystem (14) sowohl das tatsächliche Chassisquerbeschleunigungssignal ($F_2$) als auch das tatsächliche Radquerbeschleunigungssignal ($F_1$) erhält und aus diesen das tatsächliche Rollwinkelsignal ($\theta_M$) erzeugt.

6. Einrichtung nach Anspruch 5, dadurch gekennzeichnet, daß die Einrichtung (11, 13) zum Erzeugen eines tatsächlichen Chassisquerbeschleunigungssignals ($F_2$) und die Einrichtung (10, 12) zum Erzeugen des oder eines tatsächlichen Radquerbeschleunigungssignals ($F_1$) entsprechende Beschleunigungsmesser (10, 11) aufweisen.

7. Einrichtung nach Anspruch 5, dadurch gekennzeichnet, daß die Einrichtung (11, 13) zum Erzeugen eines tatsächlichen Chassisquerbeschleunigungssignals ($F_2$) und die Einrichtung (10, 12) zur Erzeugung des oder eines tatsächlichen Radzusammenbau-Querbeschleunigungssignals ($F_1$) entsprechende gedämpfte Pendel aufweisen, die für eine Auslenkbewegung in entsprechenden Ebenen normal zu der Länge des Fahrzeuges angeordnet sind, daß jedes Pendel ein Signal erzeugt, welches dem Auslenkwinkel des Pendels von einer Bezugsposition entspricht, die relativ zu dem Chassis bzw. dem Radzusammenbau festgelegt und bei horizontalem Fahrzeug vertikal ist, und daß das Signal von dem Radpendel das Radquerbeschleunigungssignal $(F_1)$ darstellt, wobei der Unterschied zwischen dem Signal von dem Radpendel und dem Signal von dem Chassispendel das tatsächlice Chassisquerbeschleunigungssignal $(F_2)$ ist.

8. Einrichtung nach irgendeinem der Ansprüche 1 bis 7, dadurch gekennzeichnet, daß eine Anzeigeeinrichtung (28, 29) vorgesehen ist, um anzuzeigen, wenn die Fahrzeuggeschwindigkeit kleiner als wenigstens eine vorbestimmte, sichere Geschwindigkeit ist, bei der ein Fahrzeug, dem die Einrichtung angepaßt ist, eine Kurve mit einer besonderen Krümmungseigenschaft einer Straße nehmen kann, auf der das Fahrzeug fährt, ohne das Warnsignal zu erzeugen.

9. Einrichtung nach Anspruch 8, wenn dieser von Anspruch 3 oder irgendeinem von diesen abhängenden Ansprüchen abhängt, dadurch gekennzeichnet, daß die Anzeigeeinrichtung eine Einrichtung (27) zum Erzeugen eines elektrischen Signals, welches die tatsächliche Fahrzeuggeschwindigkeit $(V_s)$ angibt, und eine Einrichtung (23, 24, 25) zum Erzeugen eines Signals $(V_A, B_B, V_C)$ aufweist, welches die oder jede vorbestimmte, sichere Geschwindigkeit bei den ungünstigsten Betriebsbedingungen des Fahrzeuges darstellt, und daß das oder jedes vorbestimmte, sichere Geschwindigkeitssignal mit der Quadratwurzel des Verhältnisses aus dem tatsächlichen Rollwinkel $(\theta_M)$ zu dem vorausgesagten Rollwinkelsignal $(\theta_R)$ bei der tatsächlichen Querbeschleunigung $(I_M)$, die das tatsächliche Rollwinkelsignal $(\theta_M)$ erzeugt, multipliziert (18) wird, bevor es mit dem tatsächlichen Geschwindigkeitssignal $(V_s)$ verglichen wird.

10. Einrichtung nach Anspruch 8 oder 9, dadurch gekennzeichnet, daß die Anzeigeeinrichtung einen Empfänger aufweist, um von einer Signaleinrichtung, die vor einer Kurve mit einer besonderen Krümmungseigenschaft auf, nahe oder unter einer Straßenoberfläche angeordnet ist, ein Signal zu empfangen, welches einer vorbestimmten, sicheren Geschwindigkeit für die Kurve entspricht, und daß der Empfänger ein Signal erzeugt, welches die vorbestimmte Geschwindigkeit darstellt.

0 053 516